# EUROPÄISCHE PATENTSCHRIFT

(11) **EP 1 031 213 B1**
(45) Veröffentlichungstag und Bekanntmachung des Hinweises auf die Patenterteilung: **16.01.2002**
(21) Anmeldenummer: 98958202.8
(22) Anmeldetag: 21.10.1998
(51) Int. Cl.: H04L 12/407, H04L 12/28

(54) **BUSSTATION**
BUS STATION
STATION BUS

(30) Priorität: 27.10.1997 DE 19747322
(43) Veröffentlichungstag der Anmeldung: 30.08.2000
(73) Patentinhaber: ROBERT BOSCH GMBH, 70442 Stuttgart (DE)
(72) Erfinder: STELZIG, Wolfgang, D-71636 Ludwigsburg (DE); KARL, Matthias, D-76275 Ettlingen (DE)
(86) Internationale Anmeldenummer: DE9803074
(87) Internationale Veröffentlichungsnummer: WO9922299

(56) Entgegenhaltungen:
- WO-A-97/29556
- DE-A- 19 539 259
- US-A- 4 639 937
- US-A- 5 297 137

## Beschreibung

### Stand der Technik

Die Erfindung geht aus von einer Busstation zur Kommunikation mit anderen Busstationen, wobei der Austausch von Nachrichten zwischen den Busstationen vorzugsweise durch Funksignale erfolgt. Es gibt bereits Kommunikationssysteme bei der Nachrichten durch Funksignale ausgetauscht werden, wie beispielsweise DECT und GSM, bei der eine Übertragung zwischen den einzelnen Stationen von einer Zentrale aus gesteuert wird.

Patentschrift US-A-5 297 137 offenbart ein redundantes Funknetz aus Funkstationen, welche eine Anpassung an geänderte Umgebungsbedingungen (z.B. Ausfall einer Funkstation oder Unterbrechung einer Funkverbindung zweier Stationen), durch Anpassung von in den Funkstationen gespeicherten Listen vornehmen.

### Vorteile der Erfindung

Die erfindungsgemäße Busstation bzw. das dadurch geschaffene Kommunikationssystem haben den Vorteil, daß eine einfache Abstimmung der Busstationen über den Datenaustausch erfolgt. Es kann daher der Ausfall einzelner Busstationen oder Kommunikationsverbindungen zwischen den Busstationen toleriert werden. Das System läßt sich sehr einfach aufbauen und es können einfach Busstationen hinzugefügt oder entfernt werden. Die Busstationen stimmen sich von selber über ein Zeitraster ab, bei dem jede Busstation ein Zeitschlitz für die Aussendung ihrer Daten zugeordnet wird.

Durch die in den abhängigen Patentansprüchen aufgeführten Maßnahmen werden vorteilhafte Weiterbildungen und Verbesserungen der Busstation nach dem unabhängigen Patentanspruch ermöglicht. Durch das Vorsehen eines Richtungszeigers kann sichergestellt werden, daß unabhängig davon, wo erstmalig eine Nachricht im Kommunikationssystem auftritt, diese an alle Busstationen verteilt wird. Die Busstationen sind dabei auch ausgebildet Nachrichten von Datenquellen weiterzugeben. Weiterhin können die Busstationen dazu ausgebildet sein, eine Wiederholung ihrer Nachricht von anderen Busstationen zu überwachen. Damit kann insbesondere für Busstationen die nur wenige Kommunikationsverbindungen aufweisen sichergestellt werden, daß die Nachricht auch zuverlässig jede Busstation des Kommunikationssystems erreicht.

### Zeichnung

Ausführungsbeispiele der Erfindung sind in der Zeichnung dargestellt und in der nachfolgenden Beschreibung näher erläutert. Es zeigen die Figur 1 ein Kommunikationssystem mit sechs Busstationen, Figur 2 das Format der Nachrichten die zwischen den Busstationen ausgetauscht wird, die Figuren 3 bis 5 verschiedene Abfolgen von Zeitschlitzen, Figur 6 ein Kommunikationssystem in dem neben Busstationen noch Datenquellen und Datensenken vorgesehen sind, Figur 7 das Format einer Nachricht einer Datenquelle und Figur 8 den schematischen Aufbau einer Busstation, Datenquelle oder Datensenke.

### Beschreibung

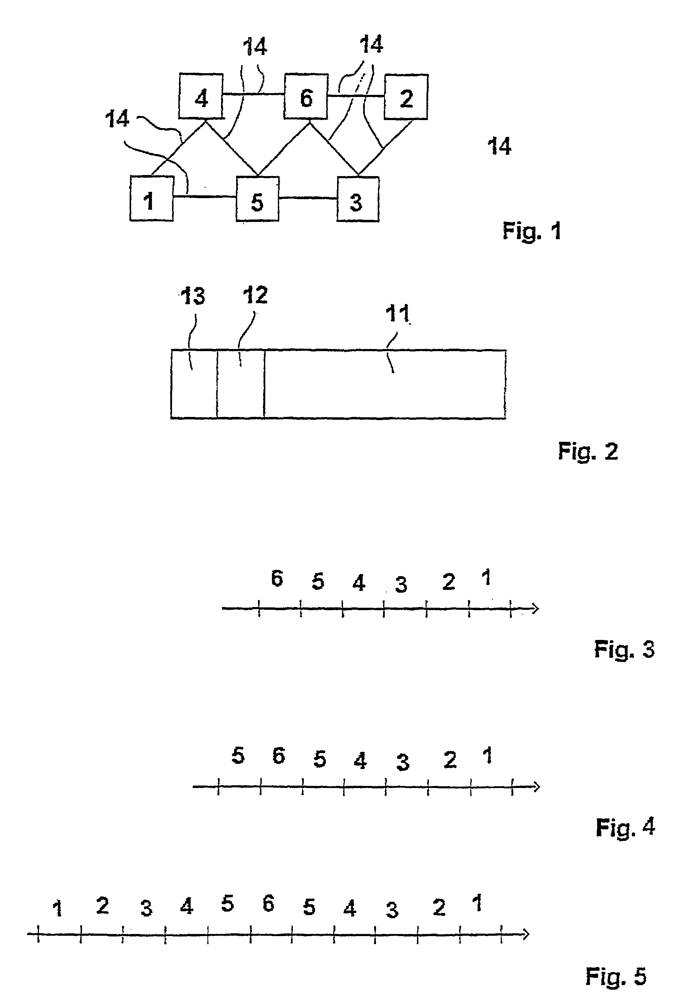

In der Figur 1 wird ein Kommunikationssystem bestehend aus sechs Busstationen gezeigt. Diese Busstationen sind jeweils mit einer Zahl von 1 bis 6 gekennzeichnet. Die Busstationen 1 bis 6 sind durch Kommunikationsverbindungen 14 verbunden. Bei den Kommunikationsverbindungen 14 wird insbesondere an einen Datenaustausch zwischen den Busstationen durch eine Funkverbindung gedacht. Aufgrund der räumlichen Anordnung ' der Busstationen kann dabei ein Funksignal nicht alle Busstationen erreichen, sondern jeweils nur bestimmte benachbarte Stationen. Dies wird durch die Kommunikationsverbindungen 14, die jeweils nur einzelne Busstationen miteinander verbinden, zum Ausdruck gebracht. Die Busstation 1 ist durch Kommunikationsverbindungen 14 mit den Busstationen 4 und 5 verbunden. Die Busstation 2 ist durch Kommunikationsverbindungen 14 mit den Busstationen 3 und 6 verbunden. Die Busstation 3 ist durch Kommunikationsverbindungen 14 mit den Busstationen 2, 5 und 6 verbunden. Die Busstation 4 ist mit Kommunikationsverbindungen 14 mit den Busstationen 1, 5 und 6 verbunden. Die Busstation 5 ist durch Kommunikationsverbindungen 14 mit den Busstationen 1, 3, 4 und 6 verbunden. Die Busstation 6 ist durch Kommunikationsverbindungen 14 mit den Busstationen 2, 3, 4 und 5 verbunden.

Die den Busstationen hier zugewiesenen Zahlen sind in den Busstationen gespeichert und sind für den Datenaustausch von Bedeutung. Dabei ist die höchste, in dem Kommunikationssystem vergebene Zahl für der Busstation mit der höchsten Anzahl von Kommunikationsverbindungen 14 vergeben. Im Beispiel nach der Figur 1 weisen die Busstationen 5 und 6 jeweils vier Kommunikationsverbindungen 14, die Busstation 3 und 4 jeweils drei Kommunikationsverbindungen 14 und die Stationen 2 und 1 jeweils zwei Kommunikationsverbindungen 14 zu anderen Busstationen auf. Jede den Busstationen zugeordnete Zahl ist nur einfach vergeben. Jede Busstation sollte mindestens zwei Kommunikationsverbindungen zu anderen Busstationen aufweisen. Durch diese Maßnahme wird gewährleistet, daß auch bei einem Ausfall einer Kommunikationsverbindung oder beim Ausfall einer der Busstationen mindestens noch eine Kommunikationsverbindung 14 zu einer funktionierenden Busstation bestehen bleibt. Beim gleichzeitigen Ausfall mehrerer Busstationen und/oder mehrerer Kommunikationsverbindungen kann jedoch der Fall auftreten, daß einzelne Busstationen nicht mehr mit anderen Busstationen kommunizieren können. Beim Aussenden einer Nachricht sendet dabei jede Busstation zeitgleich auf allen zu der Busstation gehörenden Kommunikationsverbindungen 14. Eine von der Busstation 1 ausgesendete Nachricht erreicht somit gleichzeitig die Stationen 4 und 5. Eine von der Busstation 6 ausgesandte Nachricht erreicht gleichzeitig die Stationen 2, 3, 4 und 5. Die Busstation mit der höheren Zahl erreichen somit beim Aussenden einer Nachricht zeitgleich eine wesentlich größere Anzahl von Busstationen. Es ist daher wünschenswert, Nachrichten möglichst immer ausgehend von einer Busstation mit einer hohen Bezugszahl auszusenden.

In der Figur 2 wird schematisch der Aufbau einer Nachricht gezeigt, wie sie von den Busstationen 1 bis 6 ausgesendet werden kann. Die Nachricht weist ein Datenteil 11 auf, der die eigentliche Nutzinformation darstellt. Dieser Datenteil 11 enthält die Informationen, die mit Hilfe der Busstationen ausgetauscht werden sollen. Weiterhin ist noch eine Positionsinformation 13 und ein Richtungszeiger 12 vorgesehen, die hier exemplarisch an den Anfang der Nachricht gestellt sind. Es sind jedoch auch andere Anordnungen dieser Informationen denkbar. Durch die Positionsinformation 13 kann die sendende Busstation bestimmt werden. Diese Positionsinformation kann beispielsweise in der in der Figur 1 den einzelnen Busstationen zugeordneten Zahl bestehen. Es ist jedoch jede Art der Sendeinformation möglich die es erlaubt, die Identität der sendenden Station zu bestimmen.

Den Busstationen ist eine bestimmte Reihenfolge zugeordnet, die in der Figur 1 durch eine der Zahlen von 1 bis 6 angegeben wird. Die Positionsinformation erlaubt es nun, die Position der sendenden Busstation im Verhältnis zu den anderen Busstationen des in der Figur 1 gezeigten Kommunikationssystems zu bestimmen. Eine Reihenfolge der Busstationen, wie sie in der Figur 1 dargestellt wird, kann beispielsweise in der Abfolge 1, 2, 3, 4, 5 und 6 oder in der Reihenfolge 6, 5, 4, 3, 2, 1 bestehen. Zusätzlich zur Positionsinformation 13 ist daher noch ein Richtungszeiger 12 vorgesehen, durch den angegeben wird, ob die Reihenfolge in einer ersten Richtung 1 bis 6 (up-Pfad) oder einer zweiten Richtung, die entgegengesetzt zur ersten Richtung ist, 6 bis 1 (down-Pfad), durchlaufen wird.

In den Busstationen sind somit Informationen über eine Reihenfolge der Busstationen gespeichert und eine Information, die es den Busstationen selbst erlaubt, ihre Position innerhalb dieser Reihenfolge festzustellen. In den Nachrichten sind Informationen enthalten, anhand derer bestimmt werden kann, von welcher Station innerhalb der Reihenfolge die Nachricht ausgesendet wird und in welcher Richtung die Reihenfolge durchlaufen werden soll. Aufgrund der so in den Busstationen selbst und in den Nachrichten enthaltenen Informationen koordinieren die Busstationen den Datenaustausch.

In der Figur 3 wird der Zeitrahmen für einen Datenaustausch dargestellt, der von der Busstation 6 ausgelöst wird. Dazu wird eine Zeitachse aufgetragen, in der dann Zeitschlitze vorgesehen sind, die jeweils den Busstationen zugeordnet sind. Es wird zunächst davon ausgegangen, daß keine der Busstationen 1 - 6 Nachrichten sendet. Die Busstation 6 sendet dann in einem ersten Zeitschlitz eine Nachricht aus, wie sie in der Figur 2 dargestellt wird. Diese Nachricht enthält dann einen Datenteil 11, der an alle Busstationen übermittelt werden soll. Weiterhin ist ein Richtungszeiger 12 vorgesehen, der hier in Down-Richtung zeigt, da die Reihenfolge ausgehend von der Busstation 6 absteigend bis zur Busstation 1 durchlaufen werden soll. Weiterhin enthält die Nachricht eine Positionsinformation, die hier der einfachheithalber einfach aus der Zahl 6 besteht. Die Nachricht wird von der Busstation 6 durch ein entsprechendes Funksignal ausgesandt und erreicht über die Kommunikationsverbindungen 14 die Busstationen 2, 3, 4 und 5 im wesentlichen gleichzeitig. Laufzeitunterschiede des Funksignals werden hier vernachlässigt, da davon ausgegangen wird, daß die Busstationen keinen großen Abstand zueinander aufweisen. Aufgrund der so erhaltenen Informationen berechnet jede der Busstationen 2, 3, 4 und 5, das Zeitraster, wie es in der Figur 3 dargestellt ist. Die Länge jedes Zeitschlitzes ergibt sich auf der Länge der von der Busstation 6 ausgesendeten Nachricht. Aufgrund der Positionsinformation 13 wissen alle Busstationen, die die Nachricht empfangen haben, daß nach der Nachricht der Busstation 6 nun ein Zeitschlitz für die Busstation 5 vorgesehen ist, daß nach dem Zeitschlitz der Busstation 5 ein Zeitschlitz für die Busstation 4 vorgesehen ist, daß danach ein Zeitschlitz für die Busstation 3, danach ein Zeitschlitz für die Busstation 2 und danach ein Zeitschlitz für die Busstation 1 vorgesehen ist. Alle Busstationen sind nun so ausgelegt, daß sie die empfangenen Nachrichten jeweils in dem für sie vorgesehenen Zeitschlitz ebenfalls aussenden. Dabei wird der gleiche Datenteil, wie bei der ursprünglichen Nachricht der Busstation 6 verwendet. Die Positionsinformation wird entsprechend an die sendende Busstation angepaßt, d.h. die Busstation 5 sendet für die Positionsinformation 13 entsprechend eine 5, die Busstation 4 entsprechend eine 4 usw. Weiterhin wird vor das in der Figur 3 gezeigte Beispiel der Richtungszeiger 12 nicht verändert, so daß auch hier alle Busstationen einen nach unten zeigenden Down-Richtungszeiger verwenden.

Nachdem die Busstation 6 ihre Nachricht ausgesendet hat, sendet im nächsten Zeitschlitz die Busstation 5 eine entsprechende Nachricht mit einer Positionsinformation 13 der Busstation 5, einen Down-Richtungszeiger 12 und dem ursprünglichen Datenteil 11. Diese Nachricht der Busstation 5 wird auch von der Busstation 1 empfangen, so daß nun alle Busstationen den ursprünglich von der Busstation 6 ausgesendeten Datenteil erhalten haben. Alle weiteren Wiederholungen dieses Datenteils in den Zeitschlitzen für die Station 4, 3, 2 und 1 sind daher für den hier gezeigten Fall sinnlos, da die Informationen bereits über das gesamte Netz der Busstation 1 - 6 verteilt ist. Es können jedoch einzelne Busstationen ausfallen oder Verbindungsleitungen 14 ausfallen. In diesem Falle wird durch die mehrfache Wiederholung ein- und derselben Nachricht sichergestellt, daß die Nachricht auch alle intakten Busstationen erreicht. Für ein erstes Beispiel soll die Kommunikationsverbindung zwischen der Busstation 1 und 5 gestört sein. In diesem Fall könnte eine Nachricht ausgehend von der Busstation 6 nicht über die Busstation 5 an die Busstation 1 gelangen. Da die Busstation 1 aber noch eine weitere Kommunikationsverbindung 14 zur Busstation 4 hat und die Busstation 4 in dem entsprechenden Zeitrahmen die Nachricht noch einmal wiederholt, behält die Busstation 1 über die Kommunikationsverbindung 14 zur Busstation 4 die ursprünglich von der Busstation 6 ausgesandte Nachricht. Gleiches gilt, wenn die Busstation 5 ausfallen würde. Nach der Aussendung der Nachricht von der Busstation 6 würde dann. im Zeitschlitz 5 die Nachricht nicht von der Busstation 5 wiederholt, so daß die Busstation 1 die Nachricht der Busstation 6 nicht durch Vermittlung der Busstation 5 erhalten würde. Entsprechend erhält hier die Busstation 1 die Nachricht wieder durch Vermittlung der Busstation 4. Das so geschaffene Kommunikationssystem ist somit in der Lage, beim Ausfall einzelner Busstationen 1 bis 6 oder einzelner Kommunikationsverbindungen zu gewährleisten, daß Nachrichten im gesamten Kommunikationssystem verteilt werden.

In der Figur 4 wird wieder anhand eines Zeitstrahls, der in einzelne Zeitschlitze, die den Busstationen zugeordnet sind, dargestellt wie eine Nachricht ausgehend von der Busstation 5 im Kommunikationssystem verteilt wird. Wenn alle Kommunikationsverbindungen 14 und alle Busstationen 1 bis 6 ordnungsgemäß arbeiten, reicht es, wenn die Busstation 5 eine Nachricht aussendet, die eine Positionsinformation 13 enthält, die anzeigt, daß die Nachricht von der Busstation 5 und einen Down-Richtungszeiger 12. Durch die Aussendung dieser Nachricht würden dann im ersten Schritt die Busstationen 1, 3, 4 und 6 die Nachricht erhalten und einen der Figur 3 entsprechendes Zeitraster errechnen. In dem dazugehörigen Zeitschlitz würde dann die Nachricht von der Busstation 3 wiederholt und so auch zur Busstation 2 gelangen. Die Busstation 6 würde jedoch die Nachricht nicht wiederholen, da für sie kein Zeitschlitz mehr vorgesehen ist. Bei einem Ausfall der Busstation 3 könnte daher nicht sichergestellt werden, daß die Nachricht auch die Busstation 2 erreicht. Es ist daher vorgesehen, daß alle Busstationen, die nicht die höchste Busstation 6 darstellen, die Nachrichten zunächst mit einem aufwärtsweisenden Richtungszeiger, dem sogenannten Up-Zeiger versehen, der auf einer Reihenfolge ausgehend von der kleinsten Nummer 1 bis hin zur höchsten Nummer 6 verweist. Die Busstation 5 sendet somit eine Nachricht mit einem nach oben weisenden Up-Zeiger 12 .und einer Positionsinformation 5. Durch diese Nachricht wird der Zeitschlitz 5 auf dem Zeitstrahl der Figur 4 definiert, der dann für alle nachfolgenden Busstationen die Länge des Zeitschlitzes und aufgrund der Reihenfolge die relative Position der Zeitschlitze definiert. Die Nachricht würde danach von der Busstation 6 wiederholt, die jedoch einen nach unten zeigenden Down-Zeiger 12 verwendet. Ausgehend von dieser Nachricht entspricht dann die Abfolge der weiteren Zeitschlitze der Abfolge von Zeitschlitzen wie es bereits in der Figur selbst beschrieben wurde. Jede Busstation, abgesehen von der höchsten Busstation 6 startet somit die Verteilung von Nachrichten im Bussystem zunächst mit einem nach oben zeigenden Up-Zeiger 12.

Dies wird in der Figur 5 für den Fall dargestellt, daß eine Nachricht von der Busstation 1 ausgehend über das gesamte Bussystem verteilt wird. Durch Aussendung einer Nachricht mit der Positionsinformation 13, die auf die Busstation 1 hinweist, einem nach oben zeigenden Richtungszeiger 12 und einem Datenteil 11, wird ein erster Zeitschlitz 1 definiert, der dann als Bezugszeitschlitz für alle nachfolgenden Busstationen gilt. In den darauffolgenden Zeitschlitzen 2 und 3 werden keine Nachrichten ausgesendet, da die Busstation 1 nur zu den Busstationen 4 und 5 Kommunikationsverbindungen 14 aufweist. Trotzdem warten diese Busstationen 4 und 5, bis die für sie vorgesehenen Zeitschlitze auftauchen, um dann die Nachrichten zu wiederholen. Im Zeitschlitz 4 und dem Zeitschlitz 5 senden dann die Busstationen 4 und 5 Nachrichten mit entsprechenden Positionsinformationen 13 und aufwärtszeigenden Richtungszeigern 12. Sobald dann die Busstation 6 in ihrem Zeitschlitz sendet, entspricht die weitere Abfolge der Figur 5 der Sendeabfolge, wie sie bereits zur Figur 3 beschrieben wurde. Ab diesem Zeitpunkt ist dann auch sichergestellt, daß die Nachricht im gesamten Kommunikationssystem verteilt wird, sofern nicht mehr als eine Verbindung oder eine Busstation gestört sind.

Die Störung einer Busstation kann beispielsweise darin bestehen, daß in dem betreffenden Zeitschlitz, der der Busstation zugeordnet ist, eine Funkstörung auftritt. Wenn in einem der Zeitschlitze 5 bis 1 der Figur 3 eine Funkstörung auftritt, ist jedoch trotzdem noch sichergestellt, daß die Nachricht im gesamten Kommunikationssystem verteilt wird. Wenn während des Zeitschlitzes 5 eine Funkstörung auftritt, wird beispielsweise die Nachricht trotzdem noch wiederholt, da die Station 4 bereits im Zeitschlitz 6 die Nachricht erhalten hat und sie daher in dem ihr zugeordneten Zeitschlitz wiederholt wird. Problematisch könnte es jedoch sein, wenn in der Abfolge, wie sie zur Figur 5 beschrieben wird, im ersten Zeitschlitz 1 eine Funkstörung auftritt. Es wird daher vorgesehen, daß alle Busstationen, die eine Nachricht mit einem nach oben zeigenden Richtungszeiger (Up-Zeiger 12) aussenden, überwachen, ob aufgrund der von ihnen ausgesandten Nachricht andere Busstationen Nachrichten aussenden, die den gleichen Datenteil 11 enthalten. Wenn dies nicht innerhalb einer vorgegebenen Zeit erfolgt, senden die Busstationen die Nachrichten erneut. Die Busstation 1 wartet somit ab, ob innerhalb der Zeitschlitze 2, 3, 4, 5 oder 6 eine Nachricht wiederholt wird, die den Datenteil der ursprünglich von ihr ausgesandten Nachricht entspricht. Wenn dies nicht der Fall ist, wiederholt sie die Nachricht, entweder nach einer fest vorgegebenen Zeit oder nach einer Zeitdauer, die aufgrund von anderen empfangenen Nachrichten berechnet wird. Es kann somit vorgesehen werden, daß alle Busstationen, die eine Nachricht mit einem aufwärtsweisende Up-Zeiger ausgesandt haben, das Kommunikationssystem darauf überwachen, ob eine Nachricht zeitlich synchron in dem jeweiligen Zeitschlitz mit einem entsprechenden Datenteil wiederholt wird.

Eine weitere Möglichkeit der Fehlerbehandlung besteht darin, daß Busstationen, die eine Nachricht mit einem aufwärtszeigenden Up-Richtungszeiger ausgesandt haben, diese Nachricht in einem Zeitschlitz wiederholen, der aus einer Nachricht mit einem entsprechende Down-Zeiger resultieren würde. In dem Beispiel nach der Figur 5 könnte beispielsweise die Busstation 5 so ausgelegt sein, daß sie nachdem sie in dem ersten der Busstationen 5 zugeordneten Zeitschlitz die Nachricht mit einem Up-Zeiger ausgesandt hat, zwingend in dem zeitlich nachfolgenden Zeitschlitz für die Station 5 für eine Nachricht mit einem Down-Zeiger die Nachricht entsprechend mit einem Down-Zeiger wiederholt. Dies würde dann unabhängig davon erfolgen, ob die Busstation 6 in dem ihr zugeordneten Zeitschlitz 6 eine entsprechende Nachricht gesendet hat. Das Kommunikationssystem kann auch so gestaltet werden, daß alle Busstationen, die nur eine geringe Anzahl von Verbindungen aufweisen, beispielsweise nach der Figur 1 die Busstation 1 und 2 überprüfen, ob im Kommunikationssystem Nachrichten mit dem entsprechenden Datenteil 11 erscheinen und andere Busstationen, die mit einer größeren Anzahl von anderen Busstationen in Verbindung stehen, eine Nachricht im Up-Pfad (d.h. Nachrichten mit einem Up-Zeiger 12) zwingend auch im Down-Pfad (d.h. Nachrichten mit einem Down-Zeiger) wiederholen. In dem Kommunikationssystem nach der Figur 1 könnten beispielsweise die Busstationen 1 und 2 jeweils kontrollieren, ob die Nachrichten wiederholt werden und dies gegebenenfalls mit einem up-Zeiger wiederholen wenn keine andere Busstation die Nachricht wiederholt. Die Busstationen 3 bis 5 wiederholen die Nachrichten zunächst mit einem Up-Zeiger und in einem späteren Zeitschlitz, der immer noch entsprechend synchronisiert ist, wird die Nachricht noch einmal mit einem Down-Zeiger wiederholen. Diese Stationen überwachen nicht ob ihre Nachricht von anderen Stationen wiederholt wird. Die Busstationen 6 nimmt hier immer eine Sonderposition ein, dergestalt, daß sie aufgrund von Nachrichten mit einem Up-Zeiger nur einmal sendet, nämlich eine Nachricht mit einem Down-Zeiger.

Weiterhin sind Maßnahmen vorgesehen, die eine Auflösung erlauben wenn mehr oder weniger gleichzeitig 2 Nachrichten im Kommunikationsystem eingespeist werden, In diesem Fall kann es zu einer überlappenden Funkübertragung kommen, bei der sich dann die einzelnen Funksignale gegenseitig stören. Zur Vermeidung dieser Situation berechnen die Busstation zu jeder Nachricht, die sie empfangen, die Restlaufzeit der Nachricht. Dies entspricht dem Ablauf des durch die Nachrichten aufgespannten Zeitrasters. Wenn einer Busstation zwei Nachrichten vorliegen wird sie zunächst nur die Nachricht mit der kürzeren Restlaufzeit bearbeiten und die andere Nachricht zunächst zwischenspeichern oder aber nicht speichern. Es wird so sichergestellt, daß die Nachricht mit der geringeren Restlaufzeit mit höherer Priorität bearbeitet wird.

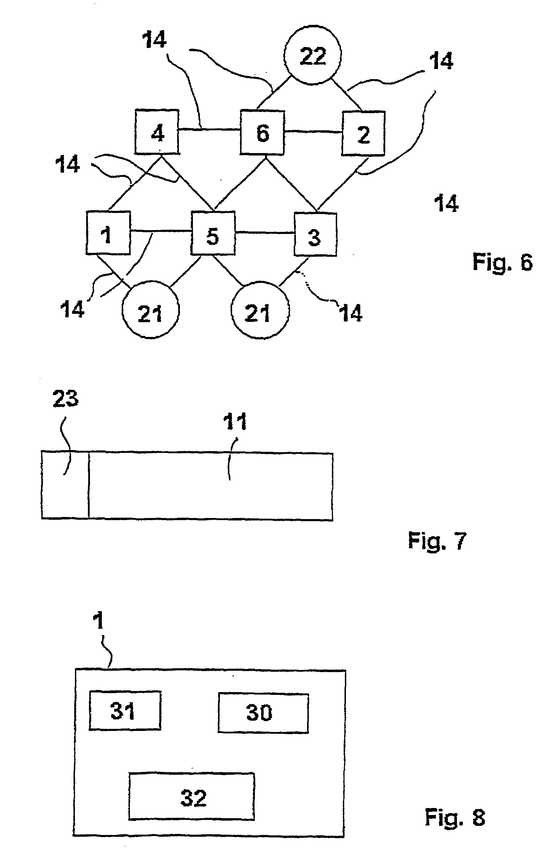

Zusätzlich zu den Busstationen 1 bis 6 können auch noch Datenquellen 21 und Datensenken 22 vorgesehen sein, wie dies in der Figur 6 gezeigt wird. In der Figur 6 wird wieder das Kommunikationssystem bestehend aus den Busstationen 1 bis 6 gezeigt, die in der gleichen Weise miteinander verbunden sind, wie dies in der Figur 1 bereits dargestellt wurde. Weiterhin sind jedoch noch zwei Datenquellen 21 und Datensenken 22 dargestellt, die jeweils aus Gründen der Sicherheit der Übertragung mindestens mit jeweils zwei Kommunikationsverbindungen 14 mit unterschiedlichen Busstationen 1 bis 6 verbunden sind. Bei einer Datenquelle 21 handelt es sich um eine Vorrichtung, die zur Aussendung eines Funksignals geeignet ist.

Beispielsweise kann es sich bei der Datenquelle 21 um einen Taster handeln, der bei Betätigung eine Nachricht aussendet, wie diese in der Figur 7 dargestellt wird. Die Nachricht in der Figur 7 weist ein Datenteil 11 auf, der dem Datenteil, wie er in der Figur 2 gezeigt wird, entspricht. Dieser Datenteil wird dann auch von den Busstationen 1 bis 6 für die zwischen den Busstationen ausgetauschten Nachrichten nach der Figur 2 weiter verwendet. Zu Beginn weist die Nachricht einen Zielblock 23 auf. Durch diesen Zielblock 23 wird die Busstation 1 bis 6 angegeben, für die die Nachricht bestimmt ist. Dabei adressieren die Datenquellen immer die höchste für sie erreichbare Busstation. Durch diese Maßnahme wird erreicht, daß immer nur eine Busstation von der Datenquelle zur Weitergabe der Nachrichten angeregt wird, und daß diese Busstation in der Weitergabekette eine möglichst hohe Position aufweist. Dabei überwachen die Datenquellen 21, ob die Busstationen entsprechend Nachrichten aussenden, die den Datenteil 11 enthalten. Wenn eine entsprechende Wiederholung der Nachricht ausbleibt, versuchen die Busstationen erneut ihre Nachricht an eine Busstation zu übertragen. Dabei wird entweder unmittelbar nach der ersten oder aber erst nach weiteren nicht bestätigten Übertragungen versucht werden, eine Busstation mit einer geringeren Stellung in der Reihenfolge zu erreichen. Die in der Figur 6 gezeigten Datenquellen 21 werden beispielsweise zuerst versuchen Nachrichten an die Busstation 5 zu senden. Sofern die Busstation 5 die Nachricht nicht wiederholt, wird entweder versucht nocheinmal die Busstation 5 zu erreichen oder aber es werden die Busstationen 1 oder 3 angesprochen. Vor dem Aussenden einer Nachricht überprüfen die Datenquellen 21 noch, ob in dem Kommunikationssystem gerade Nachrichten gesendet werden, da ein zeitgleiches Ausstrahlen von Nachrichten zu Störungen führea. Wenn die Busstation 21 vor dem Aussenden feststellt, daß bereits Nachrichten im Kommunikationssystem weitergegeben werden, wird sie zu einem späteren Zeitpunkt versuchen, ihre Nachricht noch einmal auszusenden.

Weiterhin wird in der Figur 6 noch eine Datensenke 22 gezeigt. Auch diese Datensenke sollte so ausgelegt sein, daß sie mindestens zwei Kommunikationsverbindungen, d.h. mindestens zwei Funkverbindungen zu zwei unterschiedlichen Busstationen aufweist. Bei einer derartigen Datensenke 22 handelt es sich um einen Funkempfänger, der durch den Datenteil 11 angesprochen werden kann. Es kann sich dabei beispielsweise um eine Lampe handeln, die durch ein Ansteuersignal ein- oder ausgeschaltet werden kann. Dabei ist eine derartige Datensenke einfach als passive Station ausgebildet, d.h. sie ist nur zum Empfang von Nachrichten ausgebildet und kann keine Nachrichten erzeugen oder weitergeben.

In der Figur 8 wird exemplarisch der Aufbau einer Busstation 1 gezeigt. Die Busstation 1 weist einen Funkempfänger und Funksender 30 auf, der zum Austausch von Funknachrichten zwischen den Busstationen 1 bis 6 bzw. den Datenquellen 21 oder Datensenken 22 ausgebildet ist. Weiterhin ist ein Speicher 31 vorgesehen, in dem die für die Kommunikation benötigen Informationen gespeichert werden können. Denn diese können beispielweise in einem oder mehreren Datenteilen 11, Richtungszeigern 12 und Positionsinformationen 13 bestehen. Weiterhin ist in dem Speicher 31 eine Positionsinformation, die zu der Busstation 1 gehört, gespeichert. Bei der Ablaufsteuerung 32 handelt es sich beispielsweise um ein Mikroprozessor, der zur Abarbeitung eines entsprechenden Programms, welches beispielsweise im Speicher 31 abgelegt ist, ausgebildet ist.

Durch diesen Mikroprozessor können so alle für die Kommunikation notwendigen Ansteuersignale für den Funksende/Empfänger 30 erzeugt werden. Entsprechend ist auch eine Datenquelle 21 oder eine Datensenke 22 ausgebildet, wobei dabei bei einer Datensenke nur ein Funkempfänger 30 vorgesehen ist.

## Patentansprüche

1. Busstation (1 bis 6) zum Austausch von Nachrichten mit anderen Busstationen (1 bis 6), wobei die Nachrichten einen Datenteil (11) und eine Sendeinformation aufweisen, **dadurch gekennzeichnet, daß** die Busstation (1 bis 6) eine Positionsinformation (13) der Busstation (1 bis 6) in Relation zu einer Reihenfolge der Busstationen (1 bis 6) aufweist, daß die Busstation Mittel aurweist, durch die aus der Sendeinformation die Positionsinformation (13) der sendenden Busstation ermittelbar ist, daß die Busstation Mittel aufweist, durch die beim Empfang einer Nachricht aufgrund der eigenen Positionsinformation (13) und der Sendeinformationen einen zur Busstation (1 bis 6) gehörigen Zeitschlitz ermittelbar ist, und daß die Busstation Mittel aufweist, durch die in dem nächsten zu der Busstation gehörendem Zeitschlitz eine Nachricht aussendbar ist, die den empfangenen Datenteil (11) enthält.

2. Busstation nach Anspruch 1, **dadurch gekennzeichnet, daß** in der Nachricht ein Richtungszeiger (12) enthalten ist, der angibt, daß die Reihenfolge in einer ersten Richtung, Up-Zeiger, oder einer zweiten Richtung, Down-Zeiger, die entgegengesetzt zur ersten Richtung ist, durchlaufen wird.

3. Busstation nach einem.der vorhergehenden Ansprüche, **dadurch gekennzeichnet, daß** die Busstation zum Empfang von Nachrichten mit einem Datenteil (11) einer Datenquelle (21) ausgebildet ist und daß die Busstation Mittel aufweist, durch die beim Empfang einer Nachricht von einer Datenquelle (21) eine Nachricht mit dem Datenteil an die anderen Busstationen (1 bis 6), sendbar ist.

4. Busstation nach einem der vorhergehenden Ansprüche, **dadurch gekennzeichnet, daß** die Busstation (1 bis 6) bei der Aussendung einer Nachricht den Richtungszeiger (12) der empfangenen Nachricht verwendet, daß die Busstation (1 bis 6) Mittel aufweist, durch die in Abhängigkeit vom Richtungszeiger (12) nach dem Aussenden einer Nachricht überprüfbar ist, ob eine andere Busstation (1 bis 6) den von der Busstation (1 bis 6) ausgesendeten Datenteil in einer Nachricht wiederholt, und daß die Busstation (1 bis 6) Mittel aufweist, durch die Nachricht erneut aussendbar ist, wenn keine andere Busstation den von der Busstation ausgesendeten Datenteil wiederholt.

5. Busstation nach Anspruch 4, **dadurch gekennzeichnet, daß** bei einem Richtungszeiger (12) in der ersten Richtung, Up-Zeiger, die Wiederholung des Datenteils (11) überwacht wird, und daß bei einem Richtungszeiger (12) in der zweiten Richtung, Down-Zeiger, die Wiederholung des Datenteils nicht überwacht wird.

6. Busstation nach Anspruch 4 bis 5, **dadurch gekennzeichnet, daß** die Busstation Mittel aufweist, durch die beim Empfang einer Nachricht von einer Datenquelle (21) eine Nachricht mit einem Richtungszeiger (12) in der ersten Richtung, Up-Richtung, aussendbar ist.

7. Busstation nach Anspruch 1 bis 3, **dadurch gekennzeichnet, daß** die Busstation (1 bis 6) Mittel aufweist, durch die bei Empfang einer Nachricht von einer anderen Busstation (1 bis 6) oder einer Datenquelle (21) mit einem Datenteil (11) eine Nachricht mit einem Richtungszeiger (12) in der zweiten Richtung, Down-Zeiger, und dem Datenteil (11) der empfangenen Nachricht aussendbar ist.

8. Busstation nach Anspruch 1 bis 3, **dadurch gekennzeichnet, daß** die Busstation Mittel aufweist, durch die beim Empfang einer Nachricht einer anderen Busstation (1 bis 6) oder einer Datenquelle (21) mit einem Datenteil (11) eine erste Nachricht mit dem gleichen Datenteil und einem Richtungszeiger (12) in der ersten Richtung, Up-Zeiger, und in einem nachfolgenden Zeitschlitz eine zweite Nachricht mit dem Datenteil (11) der empfangenen Nachricht und einem Richtungszeiger (12) in der zweiten Richtung, Down-Zeiger, aussendbar ist.

9. Busstation nach einem der vorhergehenden Ansprüche, **dadurch gekennzeichnet, daß** die Busstation (1 bis 6) Mittel aufweist, durch die beim Empfang einer ersten Nachricht und beim zeitlich nachfolgenden Empfang einer zweiten Nachricht, bevor die Busstation (1 bis 6) eine Nachricht ausgesendet hat, die den empfangenden Datenteil (11) der ersten Nachricht enthält, aufgrund der Sendeinformation der Länge des Datenteils und des Richtungszeigers (12) eine verbleibende Restlaufzeit der ersten und zweiten Nachricht berechenbar ist und nur die Nachricht mit der geringeren Restlaufzeit weiter bearbeitbar ist.

## Claims

1. Bus station (1 to 6) for interchanging messages with other bus stations (1 to 6), with the messages having a data part (11) and transmission information, **characterized in that** the bus station (1 to 6) has position information (13) for the bus station (1 to 6) in relation to a sequence'of bus stations (1 to 6), **in that** the bus station has means which can be used to determine the position information (13) for the transmitting bus station from the transmitted information, **in that** the bus station has means which can be used to determine a timeslot, which is associated with that bus station (1 to 6), on the basis of its own position information (13) and the transmitted information when a message is received, and **in that** the bus station has means which can be used to transmit a message, which contains the received data part (11), in the next timeslot associated with that bus station.

2. Bus station according to Claim 1, **characterized in that** the message contains a direction pointer (12) which indicates that the sequence is being carried out in a first direction, up pointer, or in a second direction, down pointer, which is in the opposite direction to the first direction.

3. Bus station according to one of the preceding claims, **characterized in that** the bus station is designed to receive messages having a data part (11) from a data source (21), and **in that** the bus station has means which can be used to transmit a message with the data part to the other bus stations (1 to 6) when a message is received from a data source (21).

4. Bus station according to one of the preceding claims, **characterized in that** the bus station (1 to 6) uses the direction pointer (12) of the received message during transmission of a message, **in that** the bus station (1 to 6) has means which can be used to check, as a function of the direction pointer (12) once a message has been transmitted, whether another bus station (1 to 6) is repeating that data part which was transmitted by the bus station (1 to 6) in a message, and **in that** the bus station (1 to 6) has means which can be used to transmit the message once again if no other bus station repeats the data part transmitted by that bus station.

5. Bus station according to Claim 4, **characterized in that** the repetition of the data part (11) is monitored if the direction pointer (12) is in the first direction, up pointer, and **in that** the repetition of the data part is not monitored if the direction pointer (12) is in the second direction, down pointer.

6. Bus station according to Claim 4 or 5, **characterized in that** the bus station has means which can be used to transmit a message with the direction pointer (12) in the first direction, up direction, when a message is received from a data source (21).

7. Bus station according to Claims 1 to 3, **characterized in that** the bus station (1 to 6) has means which can be used to transmit a message with the direction pointer (12) in the second direction, down pointer, and the data part (11) of the received message, when a message is received from another bus station (1 to 6) or from a data source (21), with a data part (11).

8. Bus station according to Claims 1 to 3, **characterized in that** the bus station has means which can be used to transmit a first message with the same data part and the direction pointer (12) in the first direction, up pointer, when a message has been received from another base station (1 to 6) or a data source (21), with a data part (11), and which can be used to transmit a second message with the data part (11) of the received message and the direction pointer (12) in the second direction, down pointer, in a subsequent timeslot.

9. Bus station according to one of the preceding claims, **characterized in that** the bus station (1 to 6) has means which can be used to calculate a remaining residual delay time for the first and second messages, and which can be used to process further only the message having the shorter residual delay time, when a first message is received and when a second message is received at a subsequent time before the bus station (1 to 6) has transmitted a message, which contains the received data part (11) of the first message, on the basis of the transmitted information relating to the length of the data part and of the direction pointer (12).

## Revendications

1. Station bus (1-6) pour l'échange d'informations avec d'autres stations bus (1-6), des informations comprenant une partie de données (11) et une information d'émission,
**caractérisée en ce que**
la station bus (1-6) présente une information de position (13) de la station de bus (1-6) en relation avec un ordre de classement des stations bus (1-6),
la station bus comprend des moyens par lesquels à partir de l'information d'émission, elle détermine l'information de position (13) de la station bus émettrice,
la station bus comprend des moyens par lesquels à la réception d'une information, sur la base de son information de position (13) et les informations d'émission, elle se voit attribuer une fenêtre de temps correspondant à l'une des stations bus (1-6), et
la station bus comporte des moyens par lesquels dans la fenêtre de temps suivante appartenant à cette station bus, elle émet une information contenue dans la partie de données reçue (11).

2. Station bus selon la revendication 1,
**caractérisée en ce que**
l'information contient un indicateur de direction (12) qui indique l'ordre dans une première direction (indicateur montant) ou dans une seconde direction (indicateur descendant) opposée à la première direction et qui doit être ainsi parcourue.

3. Station bus selon l'une des revendications précédentes,
**caractérisée en ce qu'**
elle est réalisée pour la réception d'informations avec une partie de données (11) d'une source de données (21) et elle comporte des moyens lui permettant à la réception d'une information d'une source de données (21), d'émettre une information avec la partie de données vers les autres stations bus (1-6).

4. Station bus selon l'une des revendications précédentes,
**caractérisée en ce que**
les stations bus (1-6), à l'émission d'une information, utilisent l'indicateur directionnel (12) de l'information reçue,
la station bus (1-6) comporte des moyens par lesquels, en fonction de l'indicateur directionnel (12), après l'émission d'une information, elle vérifie si une autre station bus (1-6) répète la partie de données d'une information émise par la station bus (1-6), et
la station bus (1-6) comporte des moyens permettant d'émettre de nouveau l'information si aucune autre station bus ne répète la partie de données émise par la station bus.

5. Station bus selon la revendication 4,
**caractérisée en ce qu'**
en cas d'indicateurs directionnels (12) dans la première direction (indicateur montant), on surveille la répétition de la partie de données (11) et pour un indicateur directionnel (12) de la deuxième direction (indicateur descendant), on ne surveille pas la répétition de la partie de données.

6. Station bus selon l'une des revendications 4 à 5,
**caractérisée en ce qu'**
elle comporte des moyens par lesquels à la réception d'une information d'une source de données (21) elle émet une information avec un indicateur directionnel (12) dans la première direction (direction montante).

7. Station bus selon l'une quelconque des revendications 1 à 3,
**caractérisée en ce qu'**
elle (1-6) comporte des moyens par lesquels à la réception d'une information d'une autre station bus (1-6) ou d'une source de données (21) avec une partie de données (11), elle émet une information avec un indicateur directionnel (12) dans la seconde direction (indicateur descendant) et avec la partie de données (11) provenant de l'information reçue.

8. Station bus selon l'une quelconque des revendications 1 à 3,
**caractérisée en ce qu'**
elle comporte des moyens à l'aide desquels, à la réception d'une information d'une autre station bus (1-6) ou d'une source de données (21), avec une partie de données (11), elle émet une première information avec la même partie de données et un indicateur directionnel (12) dans la première direction (indicateur montant) et dans une fenêtre de temps suivante, elle émet une seconde information avec la partie de données (11) de l'information reçue et un indicateur directionnel (12) dans la seconde direction (indicateur descendant).

9. Station bus selon l'une des revendications précédentes,
**caractérisée en ce qu'**
elle (1-6) comporte des moyens par lesquels, à la réception d'une première information et à la réception suivante dans le temps d'une seconde information, avant que la station bus (1-6) ait envoyé une information qui contient la partie de données reçue (11) de la première information, du fait de l'information d'émission de la longueur de la partie de données et de l'indicateur directionnel (12), elle calcule un temps de parcours résiduel qui subsiste de la première et de la seconde informations et elle ne traite que l'information ayant le temps de parcours résiduel le plus court.
